# EUROPEAN PATENT APPLICATION

(11) **EP 4 408 069 A1**
(43) Date of publication of application: **31.07.2024**
(21) Application number: 22897686.6
(22) Date of filing: 17.11.2022
(51) Int. Cl.: H04W 36/00

(54) **COMMUNICATION METHOD AND APPARATUS**

(30) Priority: 29.11.2021 CN 202111430931
(71) Applicant: Huawei Technologies Co., Ltd., Shenzhen, Guangdong 518129 (CN)
(72) Inventor: YUAN, Shitong, Shenzhen, Guangdong 518129 (CN); ZHANG, Xi, Shenzhen, Guangdong 518129 (CN); FAN, Bo, Shenzhen, Guangdong 518129 (CN)
(74) Representative: Gill Jennings & Every LLP
(86) International application number: PCT/CN2022/132499
(87) International publication number: WO 2023/093603

(57) **Abstract**

This application provides a communication method and apparatus. A terminal device receives a correspondence between reporting information and a to-be-activated TCI state, and a configured one-to-one correspondence between at least one TCI state and at least one first field, so that the terminal device can determine a to-be-activated TCI state and a first field corresponding to the TCI state. Therefore, on the basis of an existing mechanism of TCI state activation, based on reporting information of a terminal, the terminal device can autonomously activate a TCI state, and associate the TCI state with a corresponding field, so that signaling overheads and an indication delay are reduced, to improve performance of data transmission, and achieve good forward compatibility.

## Description

This application claims priority to Chinese Patent Application No. 202111430931.1, filed with the China National Intellectual Property Administration on November 29, 2021 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

When a terminal device moves at a high speed, beam switching needs to be frequently performed. In a current new radio (new radio, NR) protocol, UE needs to activate a beam based on signaling (for example, media (medium) access control signaling) delivered by a base station, to indicate the terminal device to activate a transmission control indicator (transmission configuration indicator, TCI) state, and the terminal device activates a corresponding TCI state. Then, the base station indicates, by using downlink control information, a TCI state in activated TCI states to serve as a serving beam of the terminal device.

However, that the base station delivers the signaling to indicate the terminal device to activate the TCI state increases signaling overheads of the base station, and also causes a signaling delay. As a result, performance of data transmission is affected. Therefore, how to improve efficiency of signaling transmission and further improve the performance of data transmission becomes a technical problem that needs to be resolved.

### SUMMARY

According to a first aspect, a communication method is provided. The method includes: A terminal device receives configuration information from a network device, where the configuration information is for configuring a correspondence between reporting information of the terminal device and a to-be-activated transmission control indicator TCI state, at least one to-be-activated TCI state corresponds to at least one first field, and each TCI state in the at least one to-be-activated TCI state and each first field in the at least one first field are in one-to-one correspondence. The terminal device determines first reporting information, where the first reporting information is determined by the terminal device based on measurement of a reference signal. The terminal device sends the first reporting information to the network device, where the first reporting information indicates a first TCI state to be activated by the terminal device and a target first field corresponding to the first TCI state, the first TCI state is one of TCI states configured in the configuration information, and the target first field is one of first fields configured in the configuration information.

The "reporting information" in this application may include one or more pieces of information. Therefore, it may also be understood as that the configuration information is for configuring a correspondence between at least one type of reporting information of the terminal device and at least one to-be-activated transmission control indicator TCI state.

In an implementation, the reporting information includes one or more of the following: information about a measurement result of the reference signal, identification information of the to-be-activated TCI state, and identification information of a configuration for reporting the measurement result.

In this application, the first reporting information may be one or more pieces of the foregoing reporting information. For example, the first reporting information sent by the terminal device to the network device may be the information about the measurement result of the reference signal. For another example, the first reporting information sent by the terminal device to the network device may be the identification information of the to-be-activated TCI state. For still another example, the first reporting information sent by the terminal device to the network device may be the identification information of the to-be-activated TCI state and the identification information of the configuration for reporting the measurement result.

The "correspondence" in this application may be, for example, pre-configured by the network device.

For the "field" in this application, for example, the field may be an indication field in downlink control information. In an example, the field may be a codepoint (codepoint). In another example, the field may be a field "101" with a length of three bits in the DCI.

In this application, in an implementation, the first reporting information may include the target first field. It may also be understood as that the first reporting information may explicitly indicate the target first field corresponding to the first TCI state.

In another implementation, the first reporting information may not include the target first field. For example, the network device pre-configures a correspondence between a TCI state and a first field. The network device may determine a TCI state based on the reporting information sent by the terminal device, to determine the target first field based on the pre-configured correspondence. For another example, it is predefined in a protocol (or a base station pre-configures) that a TCI state may correspond to a first field based on a sequence of the reporting information. It may also be understood as that the reporting information may implicitly indicate the target first field corresponding to the TCI state. In this application, the first field may be indicated by the network device, or may be a default field of the network device and the terminal device.

Based on the foregoing technical solution, the terminal device receives the correspondence between the reporting information and the to-be-activated TCI state, and the configured one-to-one correspondence between the at least one TCI state and the at least one first field, so that the terminal device can determine a to-be-activated TCI state and a first field corresponding to the TCI state. Therefore, on the basis of an existing mechanism of TCI state activation, based on reporting information of a terminal, the terminal device can further autonomously activate a TCI state, and associate the TCI state with a corresponding field, so that signaling overheads and an indication delay can be further reduced, thereby improving performance of data transmission. In addition, compatibility with a conventional technology is implemented, and a change to the conventional technology is small.

In this application, in a possible implementation, the information about the measurement result of the reference signal includes an identifier of the reference signal and the measurement result of the reference signal. The measurement result of the reference signal may be, for example, a reference signal received power (reference signal received power, RSRP) of the reference signal, or a signal to interference plus noise ratio (signal to interference plus noise ratio, SINR) of the reference signal. In another possible implementation, the information about the measurement result of the reference signal may alternatively include only the measurement result of the reference signal, for example, a channel quality indicator (channel quality indicator, CQI) of the reference signal.

In this application, for the identification information of the to-be-activated TCI state, for example, when the to-be-activated TCI state is a TCI state #5, the reporting information may be identification information of a TCI state #.

In this application, the identification information of the configuration of the measurement result may include or may be used to determine a resource identifier of the reference signal (which may also be understood as determining a reference signal to be measured), a resource for reporting the reference signal (which may also be understood as a resource used by the terminal device to report the measurement result of the reference signal), or the like. For example, the identification information of the configuration of the measurement result may be a report ID, or a channel state indication reference signal resource identifier (CSI-RS resource ID, CRI). For example, a report ID #1 corresponds to a TCI state #4, and a report ID #2 corresponds to a TCI state #5.

In an implementation, the foregoing reporting information may further include one or more of the following: identification information of the reference signal and a field corresponding to a TCI state.

For example, in this application, the terminal device may report a field "111". Assuming that the field "111" corresponds to a TCI state #8, it indicates that the terminal device is to activate the TCI state #8, and associate the TCI state with the field "111".

Based on the foregoing technical solution, in this application, there may be a plurality of types of reporting information. It may also be understood as that the configuration information may be a correspondence between the information about the measurement result of the reference signal and a TCI state, or a correspondence between the identification information of the to-be-activated TCI state and a TCI state, or a correspondence between the identification information of the configuration for reporting the measurement result and a TCI state.

In an implementation, after the terminal device sends the first reporting information to the network device, the method further includes: The terminal device associates the first TCI state corresponding to the first reporting information with the corresponding target first field. The terminal device activates, based on the configuration information, the first TCI state corresponding to the first reporting information.

Based on the foregoing technical solution, in this application, the terminal device can autonomously activate a TCI state, and associate the TCI state with a corresponding field based on the configuration information, so that the signaling overheads and the indication delay can further be reduced, and the compatibility with the conventional technology is implemented, and the change to the conventional technology is small.

In an implementation, the terminal device associates the first TCI state with the corresponding target first field includes: If there is no TCI state associated with the target first field corresponding to the first TCI state, the terminal device associates the first TCI state with the target first field. If there is a second TCI state that has been associated with the target first field corresponding to the first TCI state, the terminal device updates the second TCI state associated with the target first field to the first TCI state.

Based on the foregoing technical solution, in this application, the terminal device may replace (which may also be understood as updating) a TCI state corresponding to a first field, so that flexibility of activating the TCI state by the terminal device is improved.

In an implementation, the terminal device receives indication information from the network device, where the indication information includes a target first field, the indication information indicates the terminal device to switch a target TCI state to a TCI state corresponding to the first field, and the target TCI state is a TCI state used when the terminal device receives the indication information.

It should be understood that the "target first field" mentioned in the foregoing implementations and the "target first field" mentioned in the foregoing implementations may be a same first field, or may be different first fields in the first field. This is not limited in this application.

Based on the foregoing technical solution, in this application, the network device may send the indication information to the terminal device, and indicate, in an active TCI state of the terminal device, to switch a currently used TCI state to the TCI state corresponding to the first field, so that the indication delay is reduced, and the performance of the data transmission is improved.

In an implementation, the configuration information includes: a correspondence between at least one piece of identification information of the configuration for reporting the measurement result and at least one second field, where each piece of identification information in the at least one piece of identification information of the configuration and each second field in the at least one second field are in one-to-one correspondence, the configuration for reporting the measurement result includes the information about the measurement result of the reference signal. If the information about the measurement result of the reference signal includes measurement results of a plurality of reference signals, and all the measurement results of the plurality of reference signals meet a pre-configured reporting condition of the measurement result of the reference signal, the method further includes: The terminal device determines a target second field based on the identification information of the configuration for reporting the measurement result. The terminal device associates a TCI state corresponding to a measurement result of a first reference signal in the measurement results of the plurality of reference signals in the information about the measurement result of the reference signal with the target second field.

In this application, the target second field is determined by the network device based on the identification information of the configuration for reporting the measurement result, and the target second field is one of the at least one second field.

In an implementation, the configuration information includes a correspondence between information about a measurement result of at least one reference signal and at least one third field, where information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal. If the information about the measurement result of the reference signal includes the measurement results of the plurality of reference signals, and all the measurement results of the plurality of reference signals meet the pre-configured reporting condition of the measurement result of the reference signal, the method further includes: The terminal device determines a target third field based on the information about the measurement result of the reference signal. The terminal device associates a TCI state corresponding to a measurement result of a second reference signal in the measurement results of the plurality of reference signals in the information about the measurement result of the reference signal with the target third field.

In this application, the target third field is determined by the network device based on the information about the measurement result of the reference signal, and the target second field is one of the at least one third field.

Based on the foregoing technical solution, in this application, a specific field can be associated with a specific configuration or reference signal set that can be for reporting the measurement result, so that flexibility of a network configuration is improved.

According to a second aspect, a communication method is provided, including: A network device sends configuration information to a terminal device, where the configuration information is for configuring a correspondence between reporting information of the terminal device and a to-be-activated transmission control indicator TCI state, and at least one to-be-activated TCI state corresponds to at least one first field, and each TCI state in the at least one to-be-activated TCI state and each first field in the at least one first field are in one-to-one correspondence.

The network device receives first reporting information from the terminal device, where the first reporting information indicates a first TCI state to be activated by the terminal device and a target first field corresponding to the TCI state, the first TCI state is one of TCI states configured in the configuration information, and the target first field is one of first fields configured in the configuration information.

Based on the foregoing solution, in this application, the network device may send the configuration information to the terminal device, and the network device may determine, based on the reporting information of the terminal device, a TCI state activated by the terminal device and a corresponding field, so that downlink control information may be subsequently delivered to indicate the terminal device to switch a serving beam in the activated TCI state. This is compatible with an existing method. Signaling overheads and an indication delay are reduced.

In an implementation, the reporting information includes one or more of the following: information about a measurement result of a reference signal, identification information of the to-be-activated TCI state, identification information of a configuration for reporting the measurement result, identification information of the reference signal, and a field corresponding to a TCI state.

In an implementation, the network device receives the first reporting information from the terminal device, and the method further includes: The network device determines that the terminal device associates the first TCI state corresponding to the first reporting information with the corresponding target first field. The network device determines that the terminal device activates the TCI state corresponding to the first reporting information.

In an implementation, the network device sends indication information to the terminal device, where the indication information includes a target first field, the indication information indicates the terminal device to switch a target TCI state to a TCI state corresponding to the first field, and the target TCI state is a TCI state used when the terminal device receives the indication information.

In an implementation, the network device determines that the terminal device associates the first TCI state corresponding to the first reporting information with the corresponding target first field includes: If there is no TCI state associated with the target first field corresponding to the first TCI state, the network device determines that the terminal device associates the first TCI state with the target first field. Alternatively, if there is a second TCI state that has been associated with the target first field corresponding to the first TCI state, the network device determines that the terminal device updates the second TCI state associated with the target first field to the first TCI state.

In an implementation, the configuration information includes: a correspondence between at least one piece of identification information of the configuration for reporting the measurement result and at least one second field, where each piece of identification information in the at least one piece of identification information of the configuration and each second field in the at least one second field are in one-to-one correspondence, and the configuration for reporting the measurement result includes the information about the measurement result of the reference signal. If the information about the measurement result of the reference signal includes measurement results of a plurality of reference signals, and all the measurement results of the plurality of reference signals meet a pre-configured reporting condition of the measurement result of the reference signal, the method further includes: The network device determines that the terminal device associates a TCI state corresponding to a measurement result of a first reference signal in the measurement results of the plurality of reference signals in the information about the measurement result of the reference signal with a target second field. The target second field is determined by the network device based on the identification information of the configuration for reporting the measurement result.

In an implementation, the configuration information includes a correspondence between information about a measurement result of at least one reference signal and at least one third field, where information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal. If the information about the measurement result of the reference signal includes the measurement results of the plurality of reference signals, and all the measurement results of the plurality of reference signals meet the pre-configured reporting condition of the measurement result of the reference signal, the method further includes: The network device determines that the terminal device associates a TCI state corresponding to a measurement result of a second reference signal in the measurement results of the plurality of reference signals in the information about the measurement result of the reference signal with a target third field, where the target third field is determined by the network device based on the information about the measurement result of the reference signal.

According to a third aspect, a communication apparatus is provided. The apparatus includes a unit configured to perform the method in any one of the possible implementations of the first aspect.

According to a fourth aspect, a communication apparatus is provided. The apparatus includes a unit configured to perform the method in any one of the possible implementations of the second aspect.

According to a fifth aspect, a communication apparatus is provided, including a processor. The processor is coupled to a memory, and may be configured to execute instructions in the memory, to implement the method in any one of the possible implementations of the first aspect. Optionally, the apparatus further includes the memory. Optionally, the apparatus further includes a communication interface, and the processor is coupled to the communication interface.

In an implementation, the apparatus is a terminal device. When the apparatus is a terminal device, the communication interface may be a transceiver or an input/output interface.

In another implementation, the apparatus is a chip disposed in a terminal device. When the apparatus is the chip disposed in the terminal device, the communication interface may be an input/output interface.

In an implementation, the apparatus is a donor node device. When the apparatus is the donor node device, the communication interface may be a transceiver or an input/output interface.

In another implementation, the apparatus is a chip disposed in a donor node. When the apparatus is the chip disposed in the donor node, the communication interface may be an input/output interface. Optionally, the transceiver may be a transceiver circuit. Optionally, the input/output interface may be an input/output circuit.

According to a sixth aspect, a communication apparatus is provided, including a processor. The processor is coupled to a memory, and may be configured to execute instructions in the memory, to implement the method in any one of the possible implementations of the second aspect. Optionally, the apparatus further includes the memory. Optionally, the apparatus further includes a communication interface, and the processor is coupled to the communication interface.

In an implementation, the apparatus is a terminal device. When the apparatus is a terminal device, the communication interface may be a transceiver or an input/output interface.

In another implementation, the apparatus is a chip disposed in a terminal device. When the apparatus is a chip disposed in a terminal device, the communication interface may be an input/output interface.

In an implementation, the apparatus is a donor node device. When the apparatus is the donor node device, the communication interface may be a transceiver or an input/output interface.

In another implementation, the apparatus is a chip disposed in a donor node. When the apparatus is the chip disposed in the donor node, the communication interface may be an input/output interface. Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal through the input circuit and transmit a signal through the output circuit, so that the processor performs the method in any one of the possible implementations of either the first aspect or the second aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, receive a signal through a transceiver, and transmit a signal through a transmitter, to perform the method in any one of the possible implementations of either the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing apparatus in the eighth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computer-readable medium is provided. The computer-readable medium stores a computer program (which may also be referred to as code or instructions). When the computer program is run on a computer, the computer is enabled to perform the method in any one of the possible implementations of any one of the first aspect to the fourth aspect.

According to a tenth aspect, a computer product is provided. The computer program product includes a computer program (which may also be referred to as code or instructions). When the computer program is run, a computer is enabled to perform the method in any one of the possible implementations of either the first aspect or the second aspect.

According to a tenth aspect, a chip system is provided, including a processor, configured to invoke a computer program from a memory and run the computer program, so that a device on which the chip system is installed performs the method in any one of the possible implementations of either the first aspect or the second aspect.

According to an eleventh aspect, a communication system is provided. The communication system includes the apparatus in any one of the implementations of the third aspect and the apparatus in any one of the implementations of the fourth aspect.

### BRIEF DESCRIPTION OF DRAWINGS

FIG. 1 is a diagram of a scenario to which this application is applicable;
FIG. 2 is a flow block diagram of a method 200 according to this application.
FIG. 3 is a flow block diagram of a method 300 according to this application.
FIG. 4 is a diagram of a field corresponding to a TCI state according to this application;
FIG. 5 is another diagram of a field corresponding to a TCI state according to this application;
FIG. 6 is still another diagram of a field corresponding to a TCI state according to this application;
FIG. 7 is a schematic block diagram of a communication device according to this application;
FIG. 8 is a schematic block diagram of a communication device according to this application;
FIG. 9 is a schematic block diagram of a communication device according to this application; and
FIG. 10 is a schematic block diagram of a communication device according to this application.

### DESCRIPTION OF EMBODIMENTS

The following describes technical solutions of embodiments in this application with reference to accompanying drawings.

A wireless communication system to which embodiments of this application may be applied includes but is not limited to a global system for mobile communications (global system for mobile communications, GSM), a long term evolution (long term evolution, LTE) frequency division duplex (frequency division duplex, FDD) system, an LTE time division duplex (time division duplex, TDD) system, an LTE system, an advanced long term evolution (LTE-Advanced, LTE-A) system, a next-generation communication system (for example, a 5G communication system), a system integrating a plurality of access systems, or an evolved system (for example, a 6G communication system).

The technical solutions provided in this application may be further applied to machine type communication (machine type communication, MTC), machine-to-machine communication long term evolution (long Term Evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to another device (vehicle to X, V2X, where X may stand for anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The radio access network device may be a device with a wireless transceiver function. The radio access network device may be a device that provides a wireless communication function service, is usually located on a network side, and includes but is not limited to a next generation NodeB (gNodeB, gNB) in a 5th generation (5th generation, 5G) communication system, a next generation NodeB in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB, or a home NodeB, HNB), a baseband unit (baseband unit, BBU), a transmission reception point (transmission reception point, TRP), a transmission point (transmission point, TP), and a base transceiver station (base transceiver station, BTS). In a network structure, the access network device may include a central unit (central unit, CU) node, a distributed unit (distributed unit, DU) node, a RAN device including a CU node and a DU node, or a RAN device including a CU-control plane node, a CU-user plane node, and a DU node. The access network device may serve a cell. User equipment communicates with a base station by using a transmission resource (for example, a frequency domain resource, or in other words, a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-rate data transmission service. Alternatively, a network device may be a base station device in a 5G network or a network device in a future evolved public land mobile network (public land mobile network, PLMN) network. The radio access network device may be a macro base station, a micro base station, or an indoor base station, or may be a relay node or a donor node, a device that provides a wireless communication service for user equipment and that is in a V2X communication system, a radio controller in a cloud radio access network (cloud radio access network, CRAN) scenario, a relay station, a vehicle-mounted device, a wearable device, or a network device in a future evolved network. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station (mobile station, MS), a mobile terminal (mobile terminal, MT), or the like, and may be an entity, on a user side, configured to receive or transmit a signal, for example, a mobile phone. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and a smart city. The terminal may be a mobile phone, a tablet computer, a computer, a wearable device, a vehicle, an unmanned aerial vehicle, a helicopter, an airplane, a ship, a robot, a mechanical arm, a smart home device, or the like that has a wireless transceiver function. In embodiments of this application, an apparatus configured to implement a function of the terminal may be a terminal, or may be an apparatus that can support the terminal in implementing a function, for example, a chip system, a communication module, or a modem. The apparatus may be installed in the terminal. In this embodiment of this application, the chip system may include a chip, or may include a chip and another discrete component. In the technical solutions provided in embodiments of this application, the technical solutions provided in embodiments of this application are described by using an example in which the apparatus for implementing a terminal function is a terminal and the terminal is UE. A specific technology and a specific device form that are used by the terminal device are not limited in embodiments of this application.

Optionally, the UE may alternatively be configured to serve as a base station. For example, the UE may serve as a scheduling entity. The UE provides a sidelink signal between UE in vehicle-to-everything (vehicle-to-everything, V2X), device-to-device (device-to-device, D2D), peer-to-peer (peer-to-peer, P2P), or the like.

The base station and the terminal may be fixed or movable. The base station and the terminal may be deployed on land, including an indoor or outdoor scenario, and a handheld or a vehicle-mounted scenario; or may be deployed on water; or may be deployed on an aircraft, a balloon, or a man-made satellite in the air. Application scenarios of the base station and the terminal are not limited in embodiments of this application.

Communication between the base station and the terminal, between the base station and the base station, or between the terminal and the terminal may be performed by using a licensed spectrum, or may be performed by using an unlicensed spectrum, or may be simultaneously performed by using both the licensed spectrum and the unlicensed spectrum. The communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, an industrial control, a smart transportation, and a smart city. The function of the terminal may alternatively be performed by a module (for example, a chip or a modem) in the terminal, or may be performed by an apparatus including the function of the terminal.

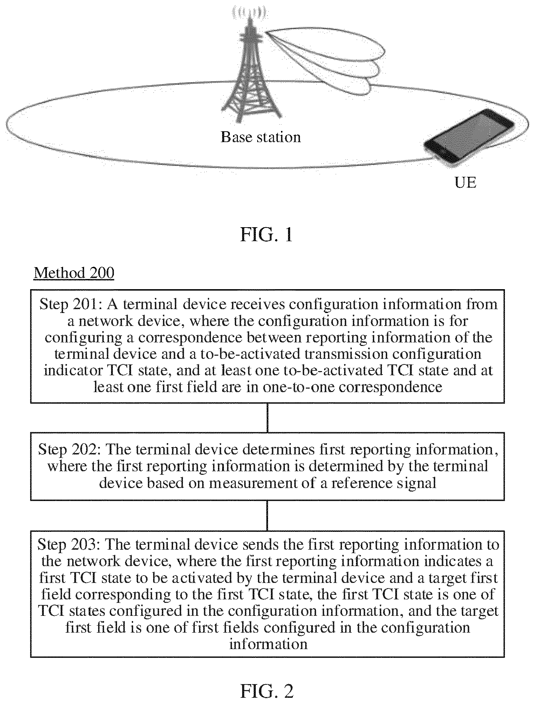

FIG. 1 is a diagram of a scenario to which this application is applicable. As shown in FIG. 1, the scenario for this application may be a scenario in which signaling transmission or data transmission is performed between a base station network device (for example, a base station) and a terminal device (for example, UE). There may be one or more network devices that communicate with the terminal device, and there may be one or more terminal devices that communicate with the network device. FIG. 1 is described by using an example in which a single network device communicates with a single terminal device. For example, the technical solutions of this application are applicable to the following scenarios.

In an example, the technical solutions of this application are applicable to a scenario of intra-cell transmission. The terminal device measures a reference signal of a non-serving beam of a current serving cell, and reports the reference signal to the current serving cell. Based on a configuration of the network device, the terminal device may switch a serving beam to the reported beam.

In another example, the technical solutions in this application are alternatively applicable to a scenario of inter-cell transmission. The terminal device measures a reference signal of a beam of a non-serving cell, and reports the reference signal to a current serving cell. Based on a configuration of the network device, after beam switching, the terminal device may receive signaling/data from another cell, but a scenario of a serving cell does not need to be switched (which may also be understood as that the terminal device receives a signal from an antenna of the another cell, but the serving cell may remain unchanged or may change).

For ease of understanding the technical solutions of this application, the following briefly describes related terms in this application.

Beam: In this application, the "beam" may also be understood as "a spatial domain filtering parameter", "a spatial filter (spatial filter)", or "a spatial parameter (spatial parameter)". A beam for sending a signal may usually be referred to as a transmission beam (transmission beam, Tx beam), or may be referred to as a spatial domain transmit filter (spatial domain transmit filter) or a spatial domain transmit parameter (spatial domain transmit parameter). A beam for receiving a signal may be referred to as a reception beam (reception beam, Rx beam), or may be referred to as a spatial domain receive filter (spatial domain receive filter) or a spatial domain receive parameter (spatial domain receive parameter).

A technology for forming the beam may be a beamforming technology or another technology. For example, the beamforming technology may be specifically a digital beamforming technology, an analog beamforming technology, a hybrid digital/analog beamforming technology, or the like. The transmission beam may refer to distribution of signal strength formed in different directions in space after a signal is transmitted through an antenna, and the reception beam may refer to distribution of signal strength, in different directions in space, of a radio signal received from an antenna.

Beamforming can be used at both a transmitting end and a receiving end, to implement spatial selectivity. An omnidirectional beam is represented as uniform radiation or approximately uniform radiation in all directions in a directivity diagram, in other words, generally referred to as non-directional or approximately non-directional. A directional beam is represented as radiation in a specific angle range in a horizontal directivity diagram, in other words, generally referred to as directional.

In an NR protocol, the beam may be, for example, the spatial domain filtering parameter (for example, a spatial domain receive filtering parameter or a spatial domain transmit filtering parameter). However, it should be understood that this application does not exclude a possibility of defining another term in a future protocol to represent a same or similar meaning.

A beam pairing relationship is a pairing relationship between the transmission beam and the reception beam, that is, a pairing relationship between the spatial domain transmit filtering parameter and the spatial domain receive filtering parameter. A large beamforming gain can be obtained through transmission of a signal between a transmission beam and a reception beam that have a beam pairing relationship.

In an implementation, the transmitting end may send a reference signal through beam sweeping, and the receiving end may also receive the reference signal through beam sweeping. Specifically, the transmitting end may form different directional beams in space through beamforming, and may perform polling on a plurality of different directional beams, to transmit the reference signal by using the different directional beams, so that a power of the reference signal can reach a maximum value when the reference signal is transmitted in a direction directed by the transmission beam. The receiving end may also form different directional beams in space through beamforming, and may perform polling on a plurality of different directional beams, to receive the reference signal by using the different directional beams, so that a power of receiving the reference signal by the receiving end can reach a maximum value in a direction directed by the reception beam.

The receiving end may perform channel measurement based on the received reference signal by traversing transmission beams and reception beams, and report a measurement result to the transmitting end. For example, the receiving end may report, to the transmitting end, some reference signal resources with large reference signal received powers (reference signal received powers, RSRPs), for example, report an identifier of the reference signal resource, so that the transmitting end receives and sends a signal based on a beam pairing relationship with good channel quality during data or signaling transmission.

Reference signal (reference signal, RS): The reference signal may also be referred to as a pilot signal (pilot signal), and is a known signal that is provided by a transmitting device for a receiving device and that is for channel estimation, channel measurement, channel sounding, channel demodulation, or the like.

In embodiments of this application, the reference signal may be applied to a physical layer (physical layer), and does not carry data information from a higher layer. In addition, the reference signal may include a downlink reference signal and an uplink reference signal.

The downlink reference signal includes a cell-specific reference signal (cell-specific reference signal, CRS) used in downlink, a terminal device-specific reference signal (UE-specific reference signal, UE-RS) used in downlink, a channel state information-reference signal (CSI-RS) used for downlink channel measurement, a group-specific reference signal (group-specific reference Signal, GRS) used in downlink, a positioning reference signal (positioning RS, PRS) used in downlink, a beam reference signal (beam reference signal, BRS) used in downlink, a beam refinement reference signal (beam refinement reference signal, BRRS) used in downlink, a phase compensation reference signal (phase compensation reference signal, PCRS) used in downlink, or the like. The UE-RS used in downlink is also referred to as a demodulation reference signal (demodulation reference signal, DMRS) used in downlink.

The uplink reference signal includes a demodulation reference signal (demodulation reference signal, DMRS) used for uplink demodulation, a sounding reference signal (sounding reference signal, SRS) used for uplink channel measurement, a PCRS used in uplink, or the like. A DMRS used for physical uplink control channel (physical uplink control channel, PUCCH) demodulation is referred to as a PUCCH DMRS, and a DMRS used for physical uplink shared channel (physical uplink shared channel, PUSCH) demodulation is referred to as a PUSCH DMRS.

In addition to the reference signal, the reference signal in this application may alternatively be a sequence signal in a sequence signal set with a good correlation characteristic. The good correlation characteristic means that any sequence in the set has a large autocorrelation peak, and any two sequences in the set have a small cross-correlation peak. To be specific, in embodiments of this application, the transmitting device may send a plurality of signals, and at least one of the signals is the sequence signal having the good correlation characteristic, for example, a pseudo random (pseudo random) sequence and a Zadoff-chu (Zadoff-chu) sequence.

Specifically, correlation means that correlation calculation is performed between one sequence signal and another sequence signal that are in a same set, to obtain a correlation value. Therefore, for the sequence signal having the good correlation characteristic, the receiving device can detect, based on the correlation characteristic, whether the signal exists. In other words, the sequence signal having the correlation characteristic is transmitted without a need to use a detection mechanism such as a pilot. The reference signal (or the pilot signal) may be one of signals having good correlation characteristics.

It should be understood that the foregoing listed specific example of the sequence signal is merely an example for description, and this application is not limited thereto. For example, the sequence signal may alternatively be a signal used to carry feedback information (for example, acknowledgment (ACK) information or negative acknowledgment (NACK) information), a resource request signal, or a measurement request signal.

Antenna port (antenna port): On a same port, a state of a channel that one symbol passes through may be deduced from a state of a channel that another symbol passes through.

Quasi co-location (quasi co-location, QCL): On different ports, a large-scale property of a channel that a symbol on one port passes through may be deduced from a large-scale property of a symbol on another port. For example, two different signals are transmitted from two antennas that are very close to each other. Due to fading, states of channels that the two signals pass through may be different, but large-scale parameters of the two channels may be the same. In this case, although the two signals correspond to different antenna ports, the two signals are quasi co-located. It may also be understood as that, if some large-scale parameters of two ports are consistent, regardless of whether actual physical locations of the two ports are different, a terminal device may consider that the two ports are sent from a same location.

The large-scale parameter may include, for example, a Doppler shift (Doppler shift), Doppler spread (Doppler spread), an average delay (average delay), delay spread (delay spread), and a spatial reception parameter (spatial RX parameter). Based on this, the quasi co-location may be further classified into four types. For example, a QCL type A includes a Doppler shift, Doppler spread, an average delay, and delay spread, and the QCL type A may be for obtaining information about channel estimation. A QCL type B includes a Doppler shift and Doppler spread, and the QCL type B may be for obtaining information about channel estimation. A QCL type C includes a Doppler shift and an average delay, and the QCL type C may be for obtaining measurement information such as a reference signal received power (reference signal received power, RSRP). A QCL type D includes a spatial Rx parameter, and the QCL type D may be for assisting the terminal device in beamforming.

The QCL type A, the QCL type B, and the QCL type C are similar to an LTE QCL type. For example, if two reference signals are of the QCL type B, the terminal device considers that Doppler shifts and Doppler spread of the two reference signals are the same. Therefore, the terminal device may obtain a Doppler shift and Doppler spread from a reference signal #1 to perform channel estimation for a reference signal #2. For example, the CSI-RS has low time domain density (where this design can reduce overheads), and the time domain density is insufficient to accurately estimate a time-varying parameter of a channel. Therefore, a Doppler parameter of the CSI-RS may be obtained from a time reference signal (time reference signal, TRS). Because frequency domain density of the CSI-RS is sufficient, frequency domain parameters such as an average delay and delay spread may be obtained from the CSI-RS. NR has a plurality of reference signals for different purposes. In this case, QCL relationships and configurations between various references (which may also be understood as reference signals) are involved.

Transmission configuration indicator state (transmission configuration indicator state, TCI state): A higher layer in a protocol may configure QCL by using the TCI state, and the TCI state is for configuring a quasi co-location relationship between one or two downlink reference signals and a DMRS of a PDSCH. The TCI state includes one or two QCL relationships. The QCL represents a consistency relationship between a signal/channel to be received currently and a previously known reference signal. If there is a QCL relationship, the terminal device may inherit a receiving or sending parameter for previously receiving a reference signal, to receive or send an upcoming signal/channel. In other words, the TCI state may indicate a QCL relationship between a reference signal #A and a reference signal #B.

TCI state configuration: The QCL defines a relationship between reference signals. Therefore, there is a source reference signal (source RS) and a target reference signal (target RS). The TCI state indicates a QCL source reference signal and a QCL type of a large-scale parameter that can be obtained from the QCL source reference signal. Two source reference signals and a QCL type pair (pair) may be configured for each TCI state, for example, a TCI state #1: a source RS #1→a QCL type X; and a TCI state #2: a source RS #2-a QCL type Y, where X or Y corresponds to one of the QCL type A, the QCL type B, the QCL type C, and the QCL type D, and X and Y are different. The TCI state #1+the TCI state #2 above may be referred to as a TCI state configuration. A network device configures, in a configuration of a target reference signal resource (for example, a CSI-RS) or in a configuration of a PDSCH/PDCCH (for example, a DMRS), a TCI state that can be used by the network device. In this case, the target reference signal corresponds to the TCI state. It may also be understood as that measurement information of the target reference signal may be obtained based on the TCI state configuration.

Currently, it has been specified in R17 that a TCI state may be configured through radio resource control (radio resource control, RRC) (where in a current protocol version, based on capability information reported by a terminal device, a network device can configure a maximum of 128 TCI states for downlink communication, and in a subsequent evolved protocol version, a maximum quantity of TCI states that can be configured may be increased). After the RRC configuration, the network device sends a media (medium) access control-control element (medium access control-control element: MAC-CE) to activate one or more TCI states (where in the current protocol version, a maximum of eight TCI states can be simultaneously activated), and the TCI states correspond to a specific field (where for example, the field may be a codepoint (codepoint)). Specifically, for a signaling format of the MAC-CE for activating the TCI state, refer to the standard TS 38.321. The network device may further send downlink control information (downlink control information, DCI) to indicate one TCI state in a plurality of activated TCI states to serve as a current serving TCI state (which may also be understood as a serving beam).

When the terminal device moves at a high speed, frequent beam switching needs to be performed. In a current new radio (new radio, NR) protocol, UE needs to activate a beam based on signaling (for example, media (medium) access control signaling) delivered by a base station, to indicate the terminal device to activate a transmission control indicator (transmission configuration indicator, TCI) state, and the terminal device activates a corresponding TCI state. Then, the base station indicates, by using downlink control information, a TCI state in activated TCI states to serve as a serving beam of the terminal device. This technology not only increases signaling overheads of the base station, but also causes a signaling delay. As a result, performance of data transmission is affected. Therefore, how to improve efficiency of signaling transmission and further improve the performance of data transmission becomes a technical problem that needs to be resolved.

This application provides a communication method. A terminal device receives a correspondence between reporting information and a to-be-activated TCI state, and a configured one-to-one correspondence between a TCI state and at least one first field, so that the terminal device can determine a to-be-activated TCI state and a first field corresponding to the TCI state. Therefore, on the basis of an existing mechanism of TCI state activation, based on reporting information of a terminal, the terminal device can further autonomously activate a TCI state, and associate the TCI state with a corresponding field, so that signaling overheads and an indication delay can further be reduced, to improve efficiency of signaling transmission, and improve performance of data transmission. In addition, compatibility with a conventional technology is implemented, and a change to the conventional technology is small.

FIG. 2 shows a communication method 200 according to this application. The method includes the following steps.

Step 201: A terminal device receives configuration information from a network device, where the configuration information is for configuring a correspondence between reporting information of the terminal device and a to-be-activated transmission control indicator TCI state, and at least one to-be-activated TCI state and at least one first field are in one-to-one correspondence.

The "correspondence" in this application may be, for example, pre-configured by the network device.

In an example, the "field" in this application may be, for example, a codepoint (codepoint), or may be, for example, a field "101" with a length of three bits in DCI.

In this application, there may be one or more first fields. That the at least one to-be-activated TCI state and the at least one first field are in one-to-one correspondence may also be understood as that the at least one to-be-activated TCI state and each first field in the at least one first field are in one-to-one correspondence. The "correspondence" in the one-to-one correspondence between the TCI state and the at least one first field may be understood as "association" between the to-be-activated TCI state and the first field. For example, a to-be-activated TCI state #1 corresponds to ("is associated with") a field "100". For another example, a to-be-activated TCI state #2 corresponds to ("is associated with") a field "101".

The reporting information in this application may include one or more of the following information: information about a measurement result of a reference signal, identification information of the to-be-activated TCI state, and identification information of a configuration for reporting the measurement result.

In this application, in a possible implementation, the information about the measurement result of the reference signal includes an identifier of the reference signal and the measurement result of the reference signal. The measurement result of the reference signal may be, for example, an RSRP of the reference signal or a SINR of the reference signal. In another possible implementation, the information about the measurement result of the reference signal may alternatively include only the measurement result of the reference signal, for example, a CQI of the reference signal.

In this application, for the identification information of the to-be-activated TCI state, for example, when the to-be-activated TCI state is a TCI state #5, the reporting information may be identification information of a TCI state #.

In this application, the identification information of the configuration of the measurement result may include or may be used to determine a resource identifier of the reference signal (which may also be understood as determining a reference signal to be measured), a resource for reporting the reference signal (which may also be understood as a resource used by the terminal device to report the measurement result of the reference signal), or the like. For example, the identification information of the configuration of the measurement result may be a report ID or a channel state indication reference signal resource identifier (CSI-RS resource ID, CRI). For example, a report ID #1 corresponds to a TCI state #4, and a report ID #2 corresponds to a TCI state #5.

In an implementation, the foregoing reporting information may further include one or more of the following: identification information of the reference signal and a field corresponding to a TCI state.

For example, in this application, the terminal device may report a field "111" in the reporting information. Assuming that the field "111" corresponds to a TCI state #8, it indicates that the terminal device is to activate the TCI state #8, and associate the TCI state with the field "111".

Step 202: The terminal device determines first reporting information, where the first reporting information is determined by the terminal device based on measurement of the reference signal.

In this application, the network device may further send a downlink reference signal to the terminal device, and the terminal device may measure the downlink reference signal. Specifically, the measurement performed by the terminal device on the reference signal may be configured by the network device. For example, the network device may indicate the terminal device to measure which parameters of the reference signal, for example, measure a reference signal received power (reference signal received power, RSRP), reference signal received quality (reference signal received quality, RSRQ), a reference signal to interference plus noise ratio (signal to interference plus noise ratio, SINR), a channel quality indicator (channel quality indicator, CQI), a received signal strength indicator (received signal strength indicator, RSSI), a rank indicator (rank indicator, RI), and a precoding indicator (precoder matrix indicator, PMI), and measure a signal to noise ratio (signal to noise ratio, SNR) of the received reference signal.

Step 203: The terminal device sends the first reporting information to the network device, where the first reporting information may indicate a first TCI state to be activated by the terminal device and a target first field corresponding to the first TCI state.

In this application, the first reporting information may be one or more pieces of information in the foregoing reporting information. For example, the first reporting information sent by the terminal device to the network device may be the information about the measurement result of the reference signal. For another example, the first reporting information sent by the terminal device to the network device may be the identification information of the to-be-activated TCI state. For still another example, the first reporting information sent by the terminal device to the network device may be the identification information of the to-be-activated TCI state and the identification information of the configuration for reporting the measurement result.

In an implementation, the first reporting information may include the target first field. It may also be understood as that the first reporting information may explicitly indicate the target first field corresponding to the first TCI state.

In another implementation, the first reporting information may not include the target first field. For example, the network device pre-configures a correspondence between a TCI state and a first field. The network device may determine a TCI state based on the reporting information sent by the terminal device, to determine the target first field based on the pre-configured correspondence. For another example, it is predefined in a protocol (or a base station pre-configures) that a TCI state may correspond to a first field based on a sequence of the reporting information. It may also be understood as that the reporting information may implicitly indicate the target first field corresponding to the TCI state.

In some embodiments, step 204 may be further included: The terminal device associates the first TCI state corresponding to the first reporting information with the corresponding target first field, and activates the first TCI state corresponding to the first reporting information.

In an implementation, after associating the first TCI state with the target first field, the terminal device and the network device may activate the corresponding TCI state after X1 milliseconds (where X1 is an integer greater than or equal to 1) or Y1 symbols (where the symbol may be understood as an orthogonal frequency division multiplexing (orthogonal frequency division multiplexing, OFDM) symbol, and Y1 is an integer greater than or equal to 1).

In an implementation, after sending the first reporting information to the network device, the terminal device needs to switch an antenna panel, and perform communication based on the first TCI state. In this case, after associating the first TCI state with the target first field, the terminal device and the network device may activate the corresponding first TCI state after X2 milliseconds (where X2 is an integer greater than or equal to 1) or Y2 symbols (where the symbol may be understood as an OFDM symbol, and Y2 is an integer greater than or equal to 1). In this application, X2 and X1 may be the same or different, and Y2 and Y1 may be the same or different. Optionally, X2>X1, and Y2>Y1.

In an example, a correspondence between the information about the measurement result of the reference signal and a TCI state may be understood as follows: For example, a measurement result of a reference signal #A corresponds to a TCI state #1, a measurement result of a reference signal #B corresponds to a TCI state #2, and a measurement result of a reference signal #C corresponds to a TCI state #3. In this application, the terminal device sends an RSRP measurement result of the reference signal #A to the network device. If a value of an RSRP of the reference signal #A measured by the terminal device meets a preset condition, the terminal device and the network device may activate the TCI state #1. For another example, the terminal device sends a CQI measurement result of the reference signal #B to the network device. If a value of a CQI of the reference signal #B measured by the terminal device meets a preset condition, the terminal device and the network device may activate the TCI state #2.

In another example, a correspondence between the identification information of the to-be-activated TCI state and a TCI state may be understood as follows: For example, if the terminal device sends a TCI state #3 to the network device, the terminal device and the network device may activate the TCI state #3.

In another example, a correspondence between the identification information of the configuration for reporting the measurement result and a TCI state may be understood as follows: For example, if the reporting information sent by the terminal device to the network device is the report ID #1 configured by the network device, the terminal device and the network device may activate the TCI state #4.

In some embodiments, step 205 may be further included: The network device sends a DCI indication to the terminal device, where DCI includes a target first field, the DCI indicates the terminal device to switch a target TCI state to a TCI state corresponding to the target first field, and the target TCI state is a TCI state used when the terminal device receives indication information.

It may also be understood as that the terminal device may subsequently receive a PDCCH and/or a PDSCH based on the TCI state corresponding to the target first field, or may determine one or more transmission beams in an uplink PUCCH signal, an uplink PUSCH signal, or an SRS signal based on the TCI state corresponding to the target first field, or the terminal device may further receive signals of some configured CSI-RS resources based on a configuration of RRC signaling and the TCI state corresponding to the target first field.

In the following embodiments of this application, an example in which the network device is a base station and the terminal device is UE is used for description.

Technical solutions involved in some steps in the following embodiments are similar. For specific implementation details, refer to the descriptions in the foregoing embodiments. In addition, a same technical effect implemented by a same technical solution is not described repeatedly. The following embodiments mainly describe technical effects implemented by different technical solutions in embodiments.

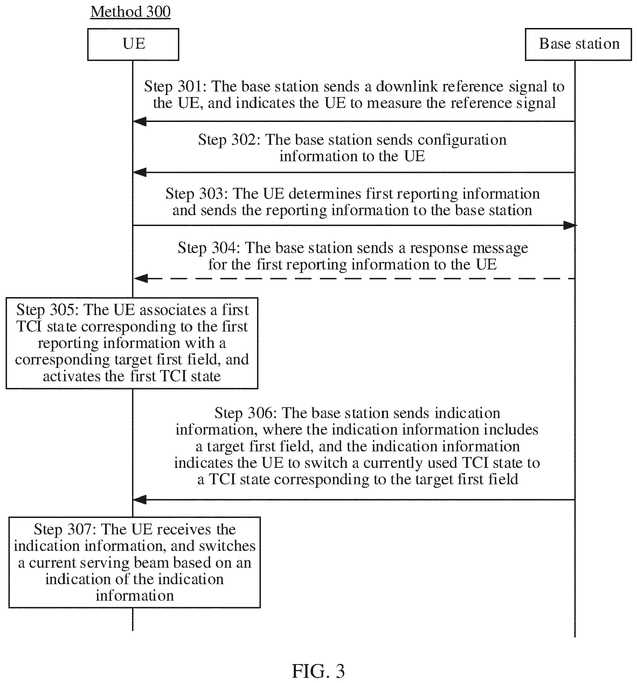

FIG. 3 shows a communication method 300 according to this application. The method includes the following steps.

Step 301: A base station sends a downlink reference signal to UE, and indicates the UE to measure the reference signal.

In this application, the base station may send the downlink reference signal to the UE, and the UE may measure the downlink reference signal. For example, in an implementation, measurement performed by the UE on the reference signal may be configured by the base station, and the base station may indicate the UE to measure which parameters of the reference signal. Specifically, for the measured parameters of the reference signal, refer to the descriptions in step 202 in the method 200, and details are not described herein again.

Step 302: The base station sends configuration information to the UE.

In this application, the configuration information may be for configuring a correspondence between reporting information of the UE and a to-be-activated TCI state. At least one to-be-activated TCI state and at least one first field (where the first field may be, for example, a codepoint (codepoint)) are in one-to-one correspondence (this may also be understood as that each TCI state in the at least one to-be-activated TCI state and each first field in the at least one first field are in one-to-one correspondence).

In an example, the configuration information may be a correspondence between a measurement result of a reference signal and a to-be-activated TCI state, for example, a correspondence between a measurement result of a reference signal #A and a TCI state #1. Specifically, the UE may first measure the reference signal based on a configuration of the base station in step 301. It is assumed that after measuring an RSRP of the reference signal #A, the UE determines that a value of the RSRP of the reference signal #A is A1. In this case, the UE may report the measurement result of the reference signal #A to the base station. In this application, it may further be predefined in a protocol (or the base station may pre-configure) that when the value of the RSRP of the reference signal #A is greater than α, the UE may activate the TCI state #1, and associate the TCI state #1 with a field #1.

In this application, for example, the base station may pre-configure same or different conditions for activating TCI states for reference signals, and the conditions may be specifically designed by a person skilled in the art based on an actual situation. For example, if the UE reports measurement results of the reference signal #A, a reference signal #B, and a reference signal #C, it is assumed that conditions for activating corresponding TCI states by the base station based on CQI measurement results of the three reference signals may be the same or may be different. Alternatively, the three reference signals are for measuring different information. For example, the reference signal #A is for measuring RSRQ, the reference signal #B is for measuring a CQI, and the reference signal #C is for measuring an RSSI. Information measured by using each reference signal and a condition for activating a corresponding TCI are not limited in this application. A person skilled in the art may flexibly design the information and the condition based on an actual situation.

In another example, the configuration information may be a correspondence between identification information of a to-be-activated TCI state and the to-be-activated TCI state. For example, an identifier corresponding to a to-be-activated TCI state #2 is a TCI state identifier #2. In addition, the TCI state #2 corresponds to a field #2.

The UE may indicate, to the base station by reporting the TCI state identifier #2, that the UE is to activate the TCI state #2, and associates the TCI state #2 with the field #2.

In an example, the configuration information may be a correspondence between identification information of a configuration for reporting a measurement result and a to-be-activated TCI state. For example, the identification information of the configuration for reporting the measurement result may include or may be used to determine a resource identifier of a reference signal, a reported resource, and the like. It is assumed that the UE may report the measurement result by using a report ID. In this case, the configuration information may be a correspondence between a report ID #3 and a TCI state #3. In addition, the TCI state #3 corresponds to a field #3.

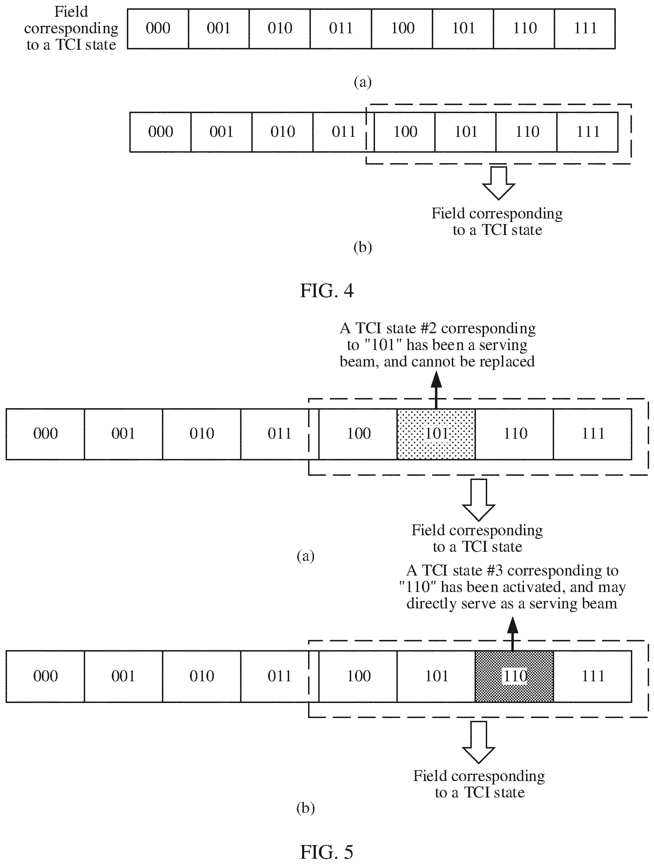

In this application, in an implementation, the base station may pre-configure or it may be predefined in a protocol that if the reporting information of the UE meets a condition for activating a TCI state (for example, one or more pieces of reported information all meet the condition for activating the TCI state), the TCI state may be associated with each field in a default sequence. Assuming that a length of the field is three bits, TCI states may be associated with binary numbers corresponding to 000 to 111 based on the correspondence. It is assumed that the TCI state #1 corresponds to a field "000", the TCI state #2 corresponds to a field "001", and the TCI state #3 corresponds to a field "010". In other words, correspondence may be sequentially performed based on a value of the binary number, as shown in (a) in FIG. 4.

In this application, in another implementation, the base station may alternatively specify a field corresponding to a TCI state. For example, the TCI state #1 corresponds to a field "100", the TCI state #2 corresponds to a field "101", and the TCI state #3 corresponds to a field "110". In this case, a field corresponding to each TCI state may be flexibly specified and configured by the base station, as shown in (b) in FIG. 4.

In still another implementation, it may be predefined in a protocol or the base station may pre-configure that TCI states corresponding to measurement results of reference signals sequentially correspond to binary numbers 000 to 111 (for example, in ascending order of the binary numbers) in descending order of the measurement results obtained by measuring the reference signals.

As described above, it may also be understood as that in this application, a correspondence between a TCI state and a field may be that the base station directly and explicitly indicates a field corresponding to each TCI state. Alternatively, the base station may perform implicit indication. To be specific, the base station configures a correspondence between the reporting information and a TCI state, and there may also be a correspondence between the reporting information and a field, so that the correspondence between the TCI state and the field is implicitly indicated.

In this application, there may be no sequence between step 301 and step 302. In other words, the base station may send the two types of information in a same piece of signaling.

Step 303: The UE determines first reporting information, and sends the first reporting information to the base station.

In an implementation, the first reporting information is determined by the terminal device based on measurement of the reference signal.

In this application, the first reporting information sent by the UE may be information about the measurement result of the reference signal, the identification information of the to-be-activated TCI state, and the identification information of the configuration for reporting the measurement result. The first reporting information may indicate, to the base station, a first TCI state to be activated by the UE and a target first field corresponding to the first TCI state.

In an implementation, the first reporting information may include the target first field. It may also be understood as that the first reporting information may explicitly indicate the target first field corresponding to the first TCI state.

In another implementation, the first reporting information may not include the target first field. For example, both the network device and the terminal device store a correspondence between a TCI state and a first field. The network device may determine a TCI state based on indication information sent by the terminal device, to determine the target first field. It may also be understood as that the first reporting information may implicitly indicate the target first field corresponding to the first TCI state.

Optionally, in some embodiments, step 304 may further be included: The base station sends a response message for the first reporting information of the UE.

In a possible implementation, when the base station sends the response message to the UE to indicate acknowledgment, the UE considers that the reported first TCI state can be activated and correspond to the target first field in sequence. When the base station sends the response message to indicate negative acknowledgment, the UE considers that the reported first TCI state cannot be activated.

In a possible implementation, when the UE receives no response message from the base station, the UE considers that the first reporting information fails to be sent, and needs to resend the reporting information.

In another possible implementation, when the UE receives no response message from the base station, the UE considers that the reported first TCI state cannot be activated.

Step 305: The UE associates the first TCI state corresponding to the first reporting information with the corresponding target first field, and activates the first TCI state.

In an implementation, after associating the first TCI state with the target first field, the terminal device and the network device may activate the corresponding TCI state after X1 milliseconds (where X1 is an integer greater than or equal to 1) or Y1 symbols (where the symbol may be understood as an orthogonal frequency division multiplexing (orthogonal frequency division multiplexing, OFDM) symbol, and Y1 is an integer greater than or equal to 1).

In an implementation, after sending the first reporting information to the network device, the terminal device needs to switch an antenna panel, and perform communication based on the first TCI state. In this case, after associating the first TCI state with the target first field, the terminal device and the network device may activate the corresponding first TCI state after X2 milliseconds (where X2 is an integer greater than or equal to 1) or Y2 symbols (where the symbol may be understood as an OFDM symbol, and Y2 is an integer greater than or equal to 1). In this application, X2 and X1 may be the same or different, and Y2 and Y1 may be the same or different. Optionally, X2>X1, and Y2>Y1.

For example, the UE may determine whether the RSRP measurement result of the reference signal #A meets a condition for activating the TCI state #1. For example, it may be predefined in a protocol (or the base station may pre-configure) that the TCI state #1 may be activated when the value of the RSRP of the reference signal #A is greater than α. Therefore, after receiving the measurement result of the reference signal #A, a base station side may also determine whether the measurement result of the reference signal #A meets the condition for activating the TCI state #1. If the condition is met, the base station may determine that the UE has activated the corresponding TCI state #1.

In the following implementation, an example in which the first field is a codepoint (codepoint) is used for description.

In an implementation, if all measurement results of a plurality of reference signals reported by the UE meet a pre-configured reporting condition of the measurement result of the reference signal, the UE may activate a corresponding TCI state, and associate the TCI state with a corresponding codepoint in sequence (where for example, the sequence may be a default sequence). For example, if the UE reports measurement results of four reference signals that meet the condition, TCI states corresponding to the four reference signals are activated. Based on a descending sequence of the measurement results, the TCI states correspond to codepoints from front to back (where for example, a codepoint is three bits, and a sequence from front to back is the binary numbers from 000 to 111).

In an implementation, if the UE finds that a corresponding codepoint has corresponded to an activated TCI, the UE may replace the activated TCI state corresponding to the codepoint with a TCI state corresponding to the reporting information. For example, it is assumed that in step 302, the base station has specified a codepoint corresponding to a TCI state that can be reported and activated by the UE, for example, specified that codepoints respectively corresponding to the TCI state #1, the TCI state #2, the TCI state #3, and a TCI state #4 that can be reported and activated by the UE are the field "100", the field "101", the field "110", and a field "111". If the field "100" has had an associated TCI state, and the associated TCI state is a TCI state #10 (which may be, for example, activated by the base station by using a MAC-CE), if the UE reports measurement results of four reference signal that meet the condition, the TCI state #2 associated with the field "100" is replaced with (which may also be understood as "updated to") the TCI state #1 corresponding to the reference signal reported by the UE.

In an implementation, if there is a TCI state that is activated and that serves as a PDCCH/PDSCH serving beam in a corresponding codepoint, the TCI state cannot be replaced. As shown in (a) in FIG. 5, "101" has originally corresponded to a TCI state #11, which is a serving beam. In this case, the TCI state corresponding to the field "101" cannot be replaced (for example, cannot be replaced with the TCI state #2 corresponding to the reporting information).

In an implementation, if the first TCI state corresponding to the first reporting information has been activated, the first TCI state may directly take effect and serve as a serving beam, and is used by the UE to send or receive a PDCCH/PDSCH. As shown in (b) in FIG. 5, the TCI state #3 corresponding to the reporting information is associated with the field "110". If 110 has been originally associated with the TCI state #3 and has been activated by the UE, the TCI state #3 may directly serve as a serving beam.

The "serving beam" in this application may be understood as follows: The UE receives a PDCCH and/or a PDSCH signal based on a parameter indicated by a TCI state, or the UE further sends an uplink PUSCH and/or a PUCCH signal based on the parameter indicated by the TCI state, or the UE may further receive a CSI-RS signal and/or send an SRS signal based on a configuration of the network device and the parameter indicated by the TCI state. In this case, the TCI state (or a beam corresponding to the TCI state) may be referred to as a serving beam.

Step 306: The base station sends indication information to the UE, where the indication information includes a target first field, and the indication information indicates the UE to switch a currently used TCI state to a TCI state corresponding to the target first field.

In this application, the TCI state currently used by the UE may also be understood as a TCI state used when the UE receives the indication information. In other words, the UE switches, to the TCI state corresponding to the target first field, the TCI state used when the UE receives the indication information.

For example, the base station may send DCI to the UE, where the DCI includes a field #1 (which is an example of the target first field), and indicates the UE to switch a serving beam to a TCI state corresponding to the field #1.

In this application, in an implementation, a serving beam (which may also be understood as a TCI state) that is switched to by the UE may be one or more TCI states that have been autonomously activated by the UE in step 304.

In this application, the UE may subsequently receive or send the PDCCH and/or the PDSCH based on the TCI state corresponding to the target first field, or may further determine one or more transmission beams of the uplink PUCCH signal, the uplink PUSCH signal, or the SRS signal based on the TCI state, or the terminal device may further receive signals of some configured CSI-RS resources based on a configuration of RRC signaling and the TCI state corresponding to the target first field.

Step 307: The UE receives the indication information, and switches a current serving beam based on an indication of the indication information.

For example, the TCI state used when the UE receives the indication information is the TCI state #1. If the indication information includes the field "101", the UE determines that the current TCI state needs to be switched, and switches the TCI state #1 to the TCI state #3. It may also be understood as that the UE may subsequently transmit data or signaling based on a beam corresponding to the TCI state #3.

Based on the foregoing technical solutions, in this application, on the basis of an existing mechanism of TCI activation, based on reporting information of a terminal, the terminal can further autonomously activate a TCI state, so that a base station does not need to additionally send MAC-CE signaling to indicate the terminal to activate which TCI states. Therefore, signaling overheads and an indication delay are reduced, to improve efficiency of signaling transmission and performance of data transmission.

In addition, in this application, a TCI state and a field may be in one-to-one correspondence. Subsequently, the base station may directly send DCI signaling to indicate a current serving TCI state of the terminal. In this way, the terminal autonomously activates a TCI state, and may further map the TCI state to a field, so that the base station subsequently indicates the terminal device to switch a serving beam.

Based on the technical solutions provided in this application, the technical solutions may be compatible with an existing method for activating a TCI state and a method for switching a serving beam, and a change to a conventional technology is small.

This application further provides a communication method 400. A procedure of the method 400 is similar to the procedure of the method 300. For understanding, refer to a flowchart in FIG. 3. The method includes the following steps.

Step 401: A base station sends a downlink reference signal to UE, and indicates the UE to measure the reference signal.

For details, refer to step 301 in the method 300. The details are not described herein again.

Step 402: The base station sends configuration information to the UE.

In this embodiment, the configuration information may include content in step 302 in the method 300.

In an implementation, the configuration information may further include a correspondence between at least one piece of identification information of a configuration for reporting a measurement result and at least one second field. In this application, each piece of identification information in the at least one piece of identification information of the configuration and each second field in the at least one second field are in one-to-one correspondence, and the configuration for reporting the measurement result includes information about a measurement result of a reference signal.

In an example, the configuration information may further include a correspondence between a report ID and a second field. For example, a report ID #1 corresponds to a field #a, a report ID #2 corresponds to a field #b, and a report ID #3 corresponds to a field #c. Each report ID includes the information about the measurement result of the reference signal. For example, the report ID #1 includes an RSRP measurement result of a reference signal #A (where for example, a TCI state corresponding to the reference signal #A is a TCI state #5), further includes an RSRP measurement result of a reference signal #B (where for example, a TCI state corresponding to the reference signal #B is a TCI state #6), and further includes an RSRP measurement result of a reference signal #C (where for example, a TCI state corresponding to the reference signal #C is a TCI state #7). If a plurality of measurement results all meet a condition for activating a corresponding TCI state, for example, it may be predefined in a protocol (or the base station may pre-configure) that a measurement result meets a condition #1, a TCI state corresponding to the reference signal may be activated. For example, the condition #1 may be that a TCI state corresponding to a reference signal with a strongest RSRP measurement result (that is, a largest RSRP value) is activated, and may be associated with a corresponding second field. For example, when the RSRP measurement result of the reference signal #C is the strongest, the TCI state #7 may be activated and associated to the field #c.

In addition, it may be further predefined in the protocol (or the base station may pre-configure) that, if the measurement result of the reference signal #C further meets a condition #2, the TCI state #7 corresponding to the reference signal #C may directly serve as a serving beam. For example, when a SINR measurement result of the reference signal #C is greater than or equal to a threshold, the TCI state #7 may directly serve as a serving beam.

In another implementation, the configuration information may further include a correspondence between information about a measurement result of at least one reference signal and at least one third field, where information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal.

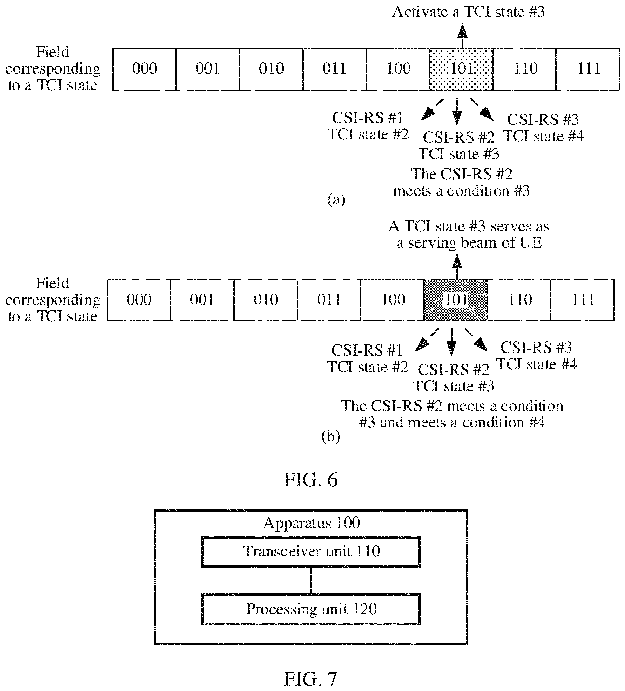

In another example, the configuration information may further include a correspondence between a CSI-RS (or synchronization signal and physical broadcast signal block (synchronization signal and PBCH block, SSB)) set and a third field. For example, information about a measurement result of a CSI-RS reference signal corresponds to a field "101", and information about a measurement result of an SSB reference signal corresponds to a field "111". The CSI-RS reference signal is used as an example. The information about the measurement result may include a CQI measurement result of a CSI-RS #1 (for example, corresponding to a TCI state #2), a CQI measurement result of a CSI-RS #2 (for example, corresponding to a TCI state #3), a CQI measurement result of a CSI-RS #3 (for example, corresponding to a TCI state #4), and the like. In this case, the base station may predefine that the measurement result meets a condition #3, and the TCI state corresponding to the reference signal may be activated. For example, the condition #3 may be that a TCI state corresponding to a reference signal with a strongest CQI measurement result (for example, a largest CQI index value) is activated, and may be associated with a corresponding third field. For example, when the CQI measurement result of the CSI-RS #2 is the strongest, the TCI state #3 may be activated and associated to the field "101", as shown in (a) in FIG. 6.

Similarly, the base station may further predefine that, if the measurement result of the reference signal #C further meets a condition #4, the TCI state #3 corresponding to the CSI-RS #2 may directly serve as a serving beam. For example, when a SINR measurement result of the CSI-RS #2 is greater than or equal to a threshold, the TCI state #3 may directly serve as a serving beam, as shown in (b) in FIG. 6.

In this application, a person skilled in the art may flexibly set the condition #1 to the condition #4 based on an actual technical situation. This is not limited.

In this application, there may be no sequence between step 401 and step 402. In other words, the base station may send the two types of information in a same piece of signaling.

Step 403: The UE determines first reporting information and sends the first reporting information to the base station.

For details, refer to step 303 in the method 300. The details are not described herein again.

Optionally, in some embodiments, step 404 may further be included: The base station sends a response message for the first reporting information of the UE.

In a possible implementation, when the base station sends the response message to the UE to indicate acknowledgment, the UE considers that a reported TCI state can be activated and can correspond to a field in sequence. When the base station sends the response message to indicate negative acknowledgment, the UE considers that a reported TCI state cannot be activated.

In a possible implementation, when the UE receives no response message from the base station, the UE considers that the first reporting information fails to be sent, and needs to resend the first reporting information.

In another possible implementation, when the UE receives no response message from the base station, the UE considers that the reported TCI state cannot be activated.

Step 405: The UE associates a first TCI state corresponding to the first reporting information with a corresponding target field, and activates the first TCI state.

For details, refer to step 305 in the method 300. The details are not described herein again.

For example, if the UE determines that the RSRP measurement result of the reference signal #C is the strongest, the TCI state #3 may be activated and associated to the field #c. If the UE determines that the SINR measurement result of the reference signal #C is greater than or equal to a threshold, the TCI state #3 may directly serve as a serving beam.

For another example, if the UE determines that the CQI measurement result of the CSI-RS #2 is the strongest, the TCI state #3 may be activated and associated to the field "101". If the UE determines that the SINR measurement result of the CSI-RS #2 is greater than or equal to a threshold, the TCI state #3 may directly serve as a serving beam.

Step 406: The base station sends indication information to the UE, where the indication information includes a target first field, a target second field, or a target third field, and the indication information indicates the UE to switch a currently used TCI state to a TCI state corresponding to the field.

Step 407: The UE receives the indication information, and switches a current serving beam based on an indication of the indication information.

For example, the TCI state used when the UE receives the indication information is the TCI state #1. If the indication information includes the field "101", the UE determines that the current TCI state needs to be switched, and switches the TCI state #1 to the TCI state #3. It may also be understood as that the UE may subsequently transmit data or signaling based on a beam corresponding to the TCI state #3.

Based on the foregoing technical solution, in this application, a specific field can further be associated with a specific reporting configuration that can be for reporting a reference signal set that takes effect or a measurement result, so that flexibility of a network configuration can be improved.

It should be understood that "predefine" in this application may be understood as "define", "predefine", "store", "pre-store", "pre-negotiate", "pre-configure", "build into", or "pre-burn".

It may be understood that, in this application, "when", "if", and "in case of" all mean that an apparatus performs corresponding processing in an objective case, are not intended to limit time, does not require the apparatus to necessarily have a determining action during implementation, and do not mean that there is another limitation.

The wording "simultaneously " in this application may be understood as being at a same time point, or may be understood as being in a time period, or may be understood as being in a same period, and may be specifically understood with reference to a context.

It should be understood that embodiments described in this application may be independent solutions, or may be combined based on intrinsic logic. These solutions all fall within the protection scope of this application.

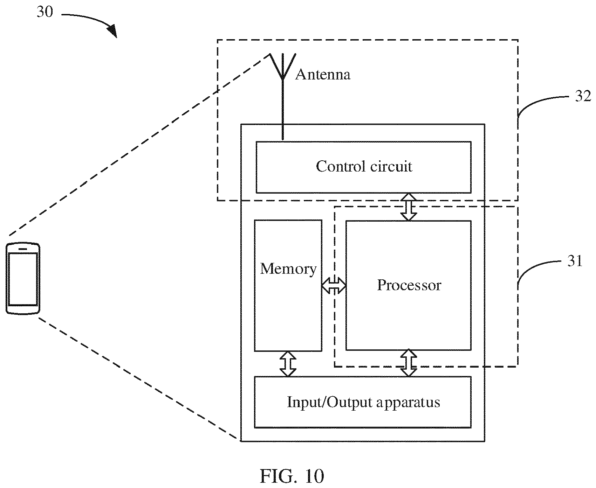

The communication methods provided in embodiments of this application are described above in detail with reference to FIG. 2 to FIG. 6. The following describes a communication device provided in embodiments of this application with reference to FIG. 7 and FIG. 10. It should be understood that descriptions of device embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between nodes. It may be understood that, to implement the foregoing function, each node, such as a terminal device or a network device, includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal device may be divided into functional modules based on the method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 7 is a schematic block diagram of a communication apparatus 100 according to an embodiment of this application. As shown in the figure, the apparatus 100 may include a transceiver unit 110 and a processing unit 120.

In a possible design, the apparatus 100 may be the terminal device in the method embodiments, or may be a chip configured to implement a function of the terminal device in the method embodiments. It should be understood that the apparatus 100 may correspond to the terminal device in the method 200, the method 300, and the method 400 in embodiments of this application, and the apparatus 100 may perform steps corresponding to the terminal device in the method 200, the method 300, and the method 400 in embodiments of this application. It should be understood that a specific process in which the units perform the foregoing corresponding steps is described in detail in the foregoing method embodiments, and for brevity, details are not described herein.

Specifically, the transceiver unit is configured to receive configuration information. The configuration information is for configuring a correspondence between reporting information of a terminal device and a to-be-activated transmission control indicator TCI state, where at least one to-be-activated TCI state corresponds to at least one first field, and each TCI state of the at least one to-be-activated TCI state and each first field in the at least one first field are in one-to-one correspondence. The processing unit is configured to determine first reporting information, where the first reporting information is determined by the terminal device based on measurement of a reference signal. The transceiver unit is configured to send the first reporting information, where the first reporting information indicates a first TCI state to be activated by the terminal device and a target first field corresponding to the first TCI state, the first TCI state is one of TCI states configured in the configuration information, and the target first field is one of first fields configured in the configuration information.

In an implementation, the processing unit is configured to associate the first TCI state corresponding to the first reporting information with the corresponding target first field. The processing unit is configured to activate, based on the configuration information, the first TCI state corresponding to the first reporting information.

In an implementation, the transceiver unit is configured to receive indication information, where the indication information includes a target first field, the indication information indicates the terminal device to switch a target TCI state to a TCI state corresponding to the target first field, and the target TCI state is a TCI state used when the terminal device receives the indication information.

In an implementation, if there is no TCI state associated with the target first field corresponding to the first TCI state, the processing unit is configured to associate the first TCI state with the target first field. Alternatively, if there is a second TCI state that has been associated with the target first field corresponding to the first TCI state, the processing unit is configured to update the second TCI state associated with the target first field to the first TCI state.

In an implementation, the processing unit is configured to determine a target second field based on identification information of a configuration for reporting a measurement result. The processing unit is configured to associate a TCI state corresponding to a measurement result of a first reference signal in measurement results of a plurality of reference signals in information about a measurement result of a reference signal with the target second field.

In an implementation, the processing unit is configured to determine a target third field based on information about a measurement result of a reference signal. The processing unit is configured to associate a TCI state corresponding to a measurement result of a second reference signal in measurement results of a plurality of reference signals in the information about the measurement result of the reference signal with the target third field.

In a possible design, the apparatus 100 may be the network device in the method embodiments, or may be a chip configured to implement a function of the network device in the method embodiments. It should be understood that the apparatus 100 may correspond to the network device in the method 200, the method 300, and the method 400 in embodiments of this application, and the apparatus 100 may perform steps corresponding to the network device in the method 200, the method 300, and the method 400 in embodiments of this application. It should be understood that a specific process in which the units perform the foregoing corresponding steps is described in detail in the foregoing method embodiments, and for brevity, details are not described herein.

In an implementation, the transceiver unit is configured to send configuration information. The configuration information is for configuring a correspondence between reporting information of the terminal device and a to-be-activated transmission control indicator TCI state, where at least one to-be-activated TCI state corresponds to at least one first field, and each TCI state of the at least one to-be-activated TCI state and each first field in the at least one first field are in one-to-one correspondence. The transceiver unit is configured to receive first reporting information, where the first reporting information indicates a first TCI state to be activated by the terminal device and a target first field corresponding to the first TCI state, the first TCI state is one of TCI states configured in the configuration information, and the target first field is one of first fields configured in the configuration information.

In an implementation, the processing unit is configured to determine that the terminal device associates the first TCI state corresponding to the first reporting information with the corresponding target first field. The processing unit is configured to determine that the terminal device activates the first TCI state corresponding to the first reporting information.

In an implementation, the processing unit is configured to send indication information, where the indication information includes a target first field, the indication information indicates the terminal device to switch a target TCI state to a TCI state corresponding to the target first field, and the target TCI state is a TCI state used when the terminal device receives the indication information.

In an implementation, if there is no TCI state associated with the target first field corresponding to the first TCI state, the processing unit is configured to determine that the terminal device associates the first TCI state with the target first field. Alternatively, if there is a second TCI state that has been associated with the target first field corresponding to the first TCI state, the processing unit is configured to determine that the terminal device updates the second TCI state associated with the target first field to the first TCI state.

In an implementation, the processing unit is configured to determine that the terminal device associates a TCI state corresponding to a measurement result of a first reference signal in measurement results of a plurality of reference signals in information about a measurement result of a reference signal with a target second field, where the target second field is determined by the network device based on identification information of a configuration for reporting a measurement result.

In an implementation, the processing unit is configured to determine that the terminal device associates, a TCI state corresponding to a measurement result of a second reference signal in the measurement results of the plurality of reference signals in the information about the measurement result of the reference signal with a target third field, where the target third field is determined by the network device based on the information about the measurement result of the reference signal.

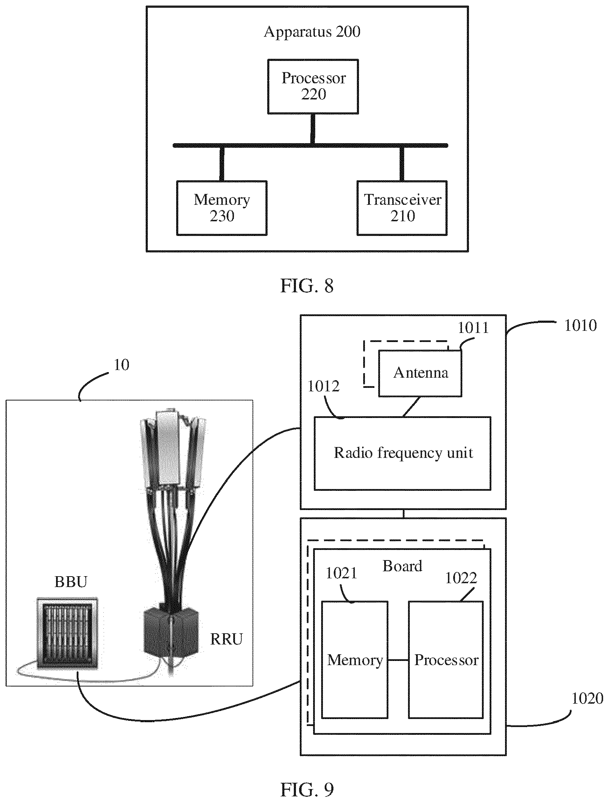

FIG. 8 is a schematic block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes a memory 230, configured to store instructions. Optionally, the device 200 further includes a transceiver 210, and the processor 220 controls the transceiver 210 to send a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (which is also referred to as a receiver machine) and a transmitter (which is also referred to as a transmitter machine). The transceiver may further include one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

It should be understood that a specific process in which the transceiver and the processor perform the foregoing corresponding steps is described in detail in the foregoing method embodiments. For brevity, details are not described herein.

FIG. 9 is a schematic diagram of a network device according to this application. The following describes a structure and functions of the network device with reference to FIG. 9. FIG. 9 is a schematic diagram of a structure of a network device 10 according to an embodiment of this application. The network device 9 may be the base station in the method 300 shown in FIG. 3. As shown in FIG. 9, the network device 10 includes a transceiver 1010 and a processor 1020.

Optionally, the transceiver 1010 may be referred to as a remote radio unit (remote radio unit, RRU), a transceiver unit, a transceiver, a transceiver circuit, or the like. The transceiver 1010 may include at least one antenna 1011 and a radio frequency unit 1012. The transceiver 1010 may be configured to: receive and send a radio frequency signal, and perform conversion between the radio frequency signal and a baseband signal.

Optionally, the network device 10 includes one or more baseband units (baseband units, BBUs) 1020. The baseband unit 1020 includes the processor 1022. The baseband unit 1020 is mainly configured to: perform baseband processing, such as channel encoding, multiplexing, modulation, and spectrum spreading, and control the base station. The transceiver 1010 and the baseband unit 1020 may be physically disposed together, or may be physically separated from each other, namely, a distributed base station.

In an example, the baseband unit 1020 may include one or more boards, and a plurality of boards may jointly support a radio access network of a single access standard, or may respectively support radio access networks of different access standards. The baseband unit 1020 includes the processor 1022. The processor 1022 may be configured to control the network device 10 to perform corresponding operations in the foregoing method embodiments described with reference to FIG. 2 to FIG. 6. Optionally, the baseband unit 1020 may further include a memory 1021, configured to store necessary instructions and data.

FIG. 10 is a schematic diagram of a terminal device according to this application. The following describes a structure and functions of the terminal device with reference to FIG. 10. A terminal device 30 may be the UE in the method 300 shown in FIG. 3. As shown in FIG. 10, the terminal device 30 includes a processor 31 and a transceiver 32.

Optionally, the transceiver 32 may include a control circuit and an antenna. The control circuit may be configured to: perform conversion between a baseband signal and a radio frequency signal, and process the radio frequency signal; and the antenna may be configured to receive and send a radio frequency signal.

Optionally, the terminal device 30 may further include a memory, an input/output apparatus, and the like.

The processor 31 may be configured to: process a communication protocol and communication data, control the entire terminal device, execute a software program, and process data of the software program, for example, configured to support the terminal device in performing the foregoing corresponding operations described with reference to FIG. 2 to FIG. 6. The memory is mainly configured to store the software program and data. After the terminal device is powered on, the processor 31 may read the software program in the memory, explain and execute instructions of the software program, and process the data of the software program.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product store compute program code. When the computer program code is run on a computer, the computer is enabled to perform a method in any one of embodiments of the method 200, the method 300, and the method 400.

According to the methods provided in embodiments of this application, this application further provides a computer-readable medium. The computer-readable medium stores program code. When the program code is run on a computer, the computer is enabled to perform a method in any one of embodiments of the method 200, the method 300, and the method 400.

According to the methods provided in embodiments of this application, this application further provides a system. The system includes the foregoing apparatus or device.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions in embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

A network side device and a terminal device in the apparatus embodiments correspond to a network side device or a terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. A part or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such understanding, the technical solutions of this application essentially, or a part contributing to the conventional technologies, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, configuration information from a network device, wherein the configuration information is for configuring a correspondence between reporting information of the terminal device and a to-be-activated transmission control indicator TCI state, at least one to-be-activated TCI state corresponds to at least one first field, and each TCI state in the at least one to-be-activated TCI state and each first field in the at least one first field are in one-to-one correspondence;
determining, by the terminal device, first reporting information, wherein the first reporting information is determined by the terminal device based on measurement of a reference signal; and
sending, by the terminal device, the first reporting information to the network device, wherein the first reporting information indicates a first TCI state to be activated by the terminal device and a target first field corresponding to the first TCI state, the first TCI state is one of TCI states configured in the configuration information, and the target first field is one of first fields configured in the configuration information.

2. The method according to claim 1, wherein the reporting information comprises one or more of the following: information about a measurement result of the reference signal, identification information of the to-be-activated TCI state, and identification information of a configuration for reporting the measurement result.

3. The method according to claim 1 or 2, wherein after the sending, by the terminal device, the first reporting information to the network device, the method further comprises:
associating, by the terminal device, the first TCI state corresponding to the first reporting information with the corresponding target first field; and
activating, by the terminal device based on the configuration information, the first TCI state corresponding to the first reporting information.

4. The method according to claim 3, wherein the associating, by the terminal device, the first TCI state corresponding to the first reporting information with the corresponding target first field comprises:
if there is no TCI state associated with the target first field corresponding to the first TCI state, associating, by the terminal device, the first TCI state with the target first field; or
if there is a second TCI state that has been associated with the target first field corresponding to the first TCI state, updating, by the terminal device, the second TCI state associated with the target first field to the first TCI state.

5. The method according to any one of claims 1 to 4, wherein the method further comprises:
receiving, by the terminal device, indication information from the network device, wherein the indication information comprises a target first field, the indication information indicates the terminal device to switch a target TCI state to a TCI state corresponding to the target first field, and the target TCI state is a TCI state used when the terminal device receives the indication information.

6. The method according to any one of claims 2 to 5, wherein the configuration information comprises:
a correspondence between at least one piece of identification information of the configuration for reporting the measurement result and at least one second field, wherein each piece of identification information in the at least one piece of identification information of the configuration and each second field in the at least one second field are in one-to-one correspondence, and the configuration for reporting the measurement result comprises the information about the measurement result of the reference signal; and
if the information about the measurement result of the reference signal comprises measurement results of a plurality of reference signals, and all the measurement results of the plurality of reference signals meet a pre-configured reporting condition of the measurement result of the reference signal, the method further comprises:
determining, by the terminal device, a target second field based on the identification information of the configuration for reporting the measurement result; and
associating, by the terminal device, a TCI state corresponding to a measurement result of a first reference signal in the measurement results of the plurality of reference signals in the information about the measurement result of the reference signal with the target second field.

7. The method according to any one of claims 2 to 6, wherein the configuration information further comprises:
a correspondence between information about a measurement result of at least one reference signal and at least one third field, wherein information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal; and
if the information about the measurement result of the reference signal comprises the measurement results of the plurality of reference signals, and all the measurement results of the plurality of reference signals meet the pre-configured reporting condition of the measurement result of the reference signal, the method further comprises:
determining, by the terminal device, a target third field based on the information about the measurement result of the reference signal; and
associating, by the terminal device, a TCI state corresponding to a measurement result of a second reference signal in the measurement results of the plurality of reference signals in the information about the measurement result of the reference signal with the target third field.

8. A communication method, comprising:
sending, by a network device, configuration information to a terminal device, wherein the configuration information is for configuring a correspondence between reporting information of the terminal device and a to-be-activated transmission control indicator TCI state, at least one to-be-activated TCI state corresponds to at least one first field, and each TCI state in the at least one to-be-activated TCI state and each first field in the at least one first field are in one-to-one correspondence; and
receiving, by the network device, first reporting information from the terminal device, wherein the first reporting information indicates a first TCI state to be activated by the terminal device and a target first field corresponding to the first TCI state, the first TCI state is one of TCI states configured in the configuration information, and the target first field is one of first fields configured in the configuration information.

9. The method according to claim 8, wherein the reporting information comprises one or more of the following: information about a measurement result of a reference signal, identification information of the to-be-activated TCI state, and identification information of a configuration for reporting the measurement result.

10. The method according to claim 8 or 9, wherein the network device receives the first reporting information from the terminal device, and the method further comprises:
determining, by the network device, that the terminal device associates the first TCI state corresponding to the first reporting information with the corresponding target first field; and
determining, by the network device, that the terminal device activates the first TCI state corresponding to the first reporting information.

11. The method according to claim 10, wherein the determining, by the network device, that the terminal device associates the first TCI state corresponding to the first reporting information with the corresponding target first field comprises:
if there is no TCI state associated with the target first field corresponding to the first TCI state, determining, by the network device, that the terminal device associates the first TCI state with the target first field; or
if there is a second TCI state that has been associated with the target first field corresponding to the first TCI state, determining, by the network device, that the terminal device updates the second TCI state associated with the target first field to the first TCI state.

12. The method according to any one of claims 8 to 11, wherein the method further comprises:
sending, by the network device, indication information to the terminal device, wherein the indication information comprises a target first field, the indication information indicates the terminal device to switch a target TCI state to a TCI state corresponding to the target first field, and the target TCI state is a TCI state used when the terminal device receives the indication information.

13. The method according to any one of claims 9 to 12, wherein the configuration information comprises:
a correspondence between at least one piece of identification information of the configuration for reporting the measurement result and at least one second field, wherein each piece of identification information in the at least one piece of identification information of the configuration and each second field in the at least one second field are in one-to-one correspondence, and the configuration for reporting the measurement result comprises the information about the measurement result of the reference signal; and
if the information about the measurement result of the reference signal comprises measurement results of a plurality of reference signals, and all the measurement results of the plurality of reference signals meet a pre-configured reporting condition of the measurement result of the reference signal, the method further comprises:
determining, by the network device, that the terminal device associates a TCI state corresponding to a measurement result of a first reference signal in the measurement results of the plurality of reference signals in the information about the measurement result of the reference signal with a target second field, wherein the target second field is determined by the network device based on the identification information of the configuration for reporting the measurement result.

14. The method according to any one of claims 9 to 13, wherein the configuration information further comprises:
a correspondence between information about a measurement result of at least one reference signal and at least one third field, wherein information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal; and
if the information about the measurement result of the reference signal comprises the measurement results of the plurality of reference signals, and all the measurement results of the plurality of reference signals meet the pre-configured reporting condition of the measurement result of the reference signal, the method further comprises:
determining, by the network device, that the terminal device associates, a TCI state corresponding to a measurement result of a second reference signal in the measurement results of the plurality of reference signals in the information about the measurement result of the reference signal with a target third field, wherein the target third field is determined by the network device based on the information about the measurement result of the reference signal.

15. A communication apparatus, comprising a transceiver unit and a processing unit, wherein the transceiver unit is configured to receive configuration information, wherein the configuration information is for configuring a correspondence between reporting information of a terminal device and a to-be-activated transmission control indicator TCI state, at least one to-be-activated TCI state corresponds to at least one first field, and each TCI state in the at least one to-be-activated TCI state and each first field in the at least one first field are in one-to-one correspondence;
the processing unit is configured to determine first reporting information, wherein the first reporting information is determined by the terminal device based on measurement of a reference signal; and
the transceiver unit is configured to send the first reporting information, wherein the first reporting information indicates a first TCI state to be activated by the terminal device and a first field corresponding to the TCI state, the first TCI state is one of TCI states configured in the configuration information, and the target first field is one of first fields configured in the configuration information.

16. The apparatus according to claim 15, wherein the reporting information comprises one or more of the following: information about a measurement result of the reference signal, identification information of the to-be-activated TCI state, and identification information of a configuration for reporting the measurement result.

17. The apparatus according to claim 15 or 16, wherein
the processing unit is configured to associate the first TCI state corresponding to the first reporting information with the corresponding target first field; and
the processing unit is configured to activate, based on the configuration information, the first TCI state corresponding to the first reporting information.

18. The apparatus according to claim 17, wherein that the processing unit is configured to associate the first TCI state corresponding to the first reporting information with the corresponding target first field comprises:
if there is no TCI state associated with the target first field corresponding to the first TCI state, the processing unit is configured to associate the first TCI state with the target first field; or
if there is a second TCI state that has been associated with the target first field corresponding to the first TCI state, the processing unit is configured to update the second TCI state associated with the target first field to the first TCI state.

19. The apparatus according to any one of claims 15 to 18, wherein
the transceiver unit is further configured to receive indication information, wherein the indication information comprises a target first field, the indication information indicates the terminal device to switch a target TCI state to a TCI state corresponding to the target first field, and the target TCI state is a TCI state used when the terminal device receives the indication information.

20. The apparatus according to any one of claims 16 to 19, wherein the configuration information comprises:
a correspondence between at least one piece of identification information of the configuration for reporting the measurement result and at least one second field, wherein each piece of identification information in the at least one piece of identification information of the configuration and each second field in the at least one second field are in one-to-one correspondence, and the configuration for reporting the measurement result comprises the information about the measurement result of the reference signal; and
if the information about the measurement result of the reference signal comprises measurement results of a plurality of reference signals, and all the measurement results of the plurality of reference signals meet a pre-configured reporting condition of the measurement result of the reference signal,
the processing unit is configured to determine a target second field based on the identification information of the configuration for reporting the measurement result; and
the processing unit is configured to associate a TCI state corresponding to a measurement result of a first reference signal in the measurement results of the plurality of reference signals in the information about the measurement result of the reference signal with the target second field.

21. The apparatus according to any one of claims 16 to 20, wherein the configuration information further comprises:
a correspondence between information about a measurement result of at least one reference signal and at least one third field, wherein information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal; and
if the information about the measurement result of the reference signal comprises the measurement results of the plurality of reference signals, and all the measurement results of the plurality of reference signals meet the pre-configured reporting condition of the measurement result of the reference signal,
the processing unit is configured to determine a target third field based on the information about the measurement result of the reference signal; and
the processing unit is configured to associate a TCI state corresponding to a measurement result of a second reference signal in the measurement results of the plurality of reference signals in the information about the measurement result of the reference signal with the target third field.

22. A communication apparatus, comprising a transceiver unit and a processing unit, wherein
the transceiver unit is configured to send configuration information, wherein the configuration information is for configuring a correspondence between reporting information of a terminal device and a to-be-activated transmission control indicator TCI state, at least one to-be-activated TCI state corresponds to at least one first field, and each TCI state in the at least one to-be-activated TCI state and each first field in the at least one first field are in one-to-one correspondence; and
the transceiver unit is configured to receive first reporting information, wherein the first reporting information indicates a first TCI state to be activated by the terminal device and a target first field corresponding to the first TCI state, the first TCI state is one of TCI states configured in the configuration information, and the target first field is one of first fields configured in the configuration information.

23. The apparatus according to claim 22, wherein the reporting information comprises one or more of the following: information about a measurement result of a reference signal, identification information of the to-be-activated TCI state, and identification information of a configuration for reporting the measurement result.

24. The apparatus according to claim 22 or 23, wherein
the processing unit is configured to determine that the terminal device associates the first TCI state corresponding to the first reporting information with the corresponding target first field; and
the processing unit is configured to determine that the terminal device activates the first TCI state corresponding to the first reporting information.

25. The apparatus according to claim 24, wherein that the processing unit is configured to determine that the terminal device associates the first TCI state corresponding to the first reporting information with the corresponding target first field comprises:
if there is no TCI state associated with the target first field corresponding to the first TCI state, the processing unit is configured to determine that the terminal device associates the first TCI state with the target first field; or
if there is a second TCI state that has been associated with the target first field corresponding to the first TCI state, the processing unit is configured to determine that the terminal device updates the second TCI state associated with the target first field to the first TCI state.

26. The apparatus according to any one of claims 22 to 25, wherein
the transceiver unit is further configured to send indication information, wherein the indication information comprises a target first field, the indication information indicates the terminal device to switch a target TCI state to a TCI state corresponding to the target first field, and the target TCI state is a TCI state used when the terminal device receives the indication information.

27. The apparatus according to any one of claims 23 to 26, wherein the configuration information comprises:
a correspondence between at least one piece of identification information of the configuration for reporting the measurement result and at least one second field, wherein each piece of identification information in a plurality of pieces of identification information of the configuration and each second field in the at least one second field are in one-to-one correspondence, and the configuration for reporting the measurement result comprises the information about the measurement result of the reference signal; and
if the information about the measurement result of the reference signal comprises measurement results of a plurality of reference signals, and all the measurement results of the plurality of reference signals meet a pre-configured reporting condition of the measurement result of the reference signal, the method further comprises:
the processing unit is configured to determine that the terminal device associates a TCI state corresponding to a measurement result of a first reference signal in the measurement results of the plurality of reference signals in the information about the measurement result of the reference signal with a target second field, wherein the target second field is determined by a network device based on the identification information of the configuration for reporting the measurement result.

28. The apparatus according to any one of claims 23 to 27, wherein the configuration information further comprises:
a correspondence between information about a measurement result of at least one reference signal and at least one third field, wherein information about each measurement result in the information about the measurement result of the at least one reference signal and each third field in the at least one third field are in one-to-one correspondence, and each third field in the at least one third field corresponds to a measurement result of one reference signal in the information about the measurement result of the at least one reference signal; and
if the information about the measurement result of the reference signal comprises the measurement results of the plurality of reference signals, and all the measurement results of the plurality of reference signals meet the pre-configured reporting condition of the measurement result of the reference signal, the method further comprises:
the processing unit is configured to determine that the terminal device associates a TCI state corresponding to a measurement result of a second reference signal in the measurement results of the plurality of reference signals in the information about the measurement result of the reference signal with a target third field, wherein the target third field is determined by the network device based on the information about the measurement result of the reference signal.

29. A communication apparatus, comprising: a processor, wherein the processor is coupled to a memory, the memory is configured to store a program or instructions, and when the program or the instructions are executed by the processor, the apparatus is enabled to perform the method according to any one of claims 1 to 7, or the apparatus is enabled to perform the method according to any one of claims 8 to 14.

30. A computer-readable storage medium, wherein the computer-readable storage medium stores a computer program, and when the computer program is run on a computer, the computer is enabled to perform the method according to any one of claims 1 to 7, or the computer is enabled to perform the method according to any one of claims 8 to 14.
